# EUROPEAN PATENT SPECIFICATION

(11) **EP 4 497 345 B1**
(45) Date of publication and mention of the grant of the patent: **15.10.2025**
(21) Application number: 24179838.8
(22) Date of filing: 04.06.2024
(51) Int. Cl.: A43B 23/02, A43D 25/20, A43D 95/10, A43D 95/12, A43D 999/00, B29C 51/20, B29C 51/26, B29D 35/14

(54) **MACHINE FOR THERMOFORMING SHOE UPPERS**
MASCHINE ZUM THERMOFORMEN VON SCHUHOBERMATERIAL
MACHINE POUR LE THERMOFORMAGE DE TIGES DE CHAUSSURE

(30) Priority: 27.07.2023 IT 202300015813
(43) Date of publication of application: 29.01.2025
(73) Proprietor: S.F.B. S.r.l., 76121 Barletta (IT)
(72) Inventor: SCARNERA, Felice, 76121 Barletta (IT); SCARNERA, Benedetto, 76121 Barletta (IT)
(74) Representative: Rapisardi, Mariacristina

(56) References cited:
- EP-A1- 3 758 539
- IT-A1- 202000 027 275

## Description

The present invention relates to a machine for thermoforming shoe uppers.

Fabric uppers, typically used in sports or accident prevention footwear, may comprise several layers of fabric holding structural plastic or metal inserts.

To make uppers of this type, a thermal process is generally adopted that uses the fusion of special thermoplastic inclusions.

The applicant holds the patent 102020000027275 describing a high productivity machine for the production of shoe uppers.

The machine described in the 102020000027275 patent involves immersing the upper, fitted on a rigid last inserted in an elastomeric sheath, in a series of boilers and subsequent immersion in a cooling tank.

After creating a vacuum in the elastomeric sheath to hold the upper layers together, the upper is introduced into the boiler from above through an opening in the top cover of the boiler, with the toe of the upper pointing downwards and the heel of the upper pointing upwards.

In boilers, the upper is rotated around a vertical axis and irradiated with short waves to melt thermoplastic inclusions.

This machine can achieve a high production capacity as it allows serial processing of uppers. However, there is a need to improve the effectiveness of heat treatment as some areas of the upper may be less exposed to radiation than others, which can lead to defects in the finished product. The technical task proposed by the present invention is, therefore, to realise a machine for thermoforming shoe uppers that eliminates the complained of technical drawbacks of the known technique.

Within the scope of this technical task, one aim of the invention is to realise a machine for thermoforming shoe uppers that allows a high production capacity with a low rejection of non-conforming products.

The technical task, as well as these and other purposes, according to the present invention are achieved by realising a machine for thermoforming at least one upper fitted on a rigid last positioned in an elastomeric sheath, comprising:
- an electronic controller;
- a central support rotating in steps around a vertical axis, said central support having: at least one radial arm supporting a block for fixing the rigid last; and a fluid-tight, engageable pneumatic head with an elastomeric conduit port;
- a plurality of heat treatment stations arranged around said central support comprising at least one boiler and at least one cooling water tank, wherein said at least one boiler has: an upper cover having an inlet and outlet opening for said upper; internal radiant heating elements comprising at least one upper heating element from above or below and at least one upper heating element from the side;
characterised by comprising means of transporting said upper within said at least one boiler in a heat treatment position at least partially external to the vertical projection of the inlet and outlet opening of the lid.

In a preferred embodiment of the invention in said heat treatment position said upper is vertically aligned to said heating element from above or below.

In a preferred embodiment of the invention said means of transport comprise a first linear slide guide of said arm for inserting and extracting said upper through the inlet and outlet opening of the boiler lid and a second linear slide guide of a movable extension of said arm for bringing said upper into said heat treatment position.

In a preferred embodiment of the invention said first linear slide guide and said second linear slide guide are transverse to each other.

In a preferred embodiment of the invention said first linear slide guide is oriented in a direction parallel to said axis and said second linear slide guide is oriented in a direction radial to said axis.

In a preferred embodiment of the invention said at least one arm has a first slide coupled to said first guide, said extension has a second slide coupled to said second guide, said first guide is rigidly constrained to said vertical support, said second guide is rigidly constrained to said arm, said fixing block of the rigid last and said pneumatic head are mounted on a frame attached to said extension.

In a preferred embodiment of the invention said fixing block is configured to fasten said rigid last with the toe of the upper pointing downwards and the heel of the upper pointing upwards.

In a preferred embodiment of the invention said internal heating elements include a first and a second heating element from above positioned under said lid.

In a preferred mode of construction, said pneumatic head has a coupling end in said elastomer sheath that can be selectively connected, by means of suitable valves means, to a vacuum pump or means of pressurising the elastomer sheath with a flow of cooled air.

In a preferred mode of realisation, said electronic controller is programmed to station said upper in said heat treatment position.

In a preferred mode of implementation, said electronic controller is programmed to select and activate said vacuum pump for the creation of vacuum in the elastomeric sheath prior to the introduction of the upper into a first boiler of a series of boilers.

In a preferred mode of embodiment, said electronic controller is programmed to deactivate said vacuum pump for vacuum elimination in the elastomeric sheath only prior to the extraction of said at least one upper from a last boiler in the boiler series.

In a preferred mode of realisation, said electronic controller is programmed to select and activate said pressurisation means when said upper is immersed in said tank of cooling water.

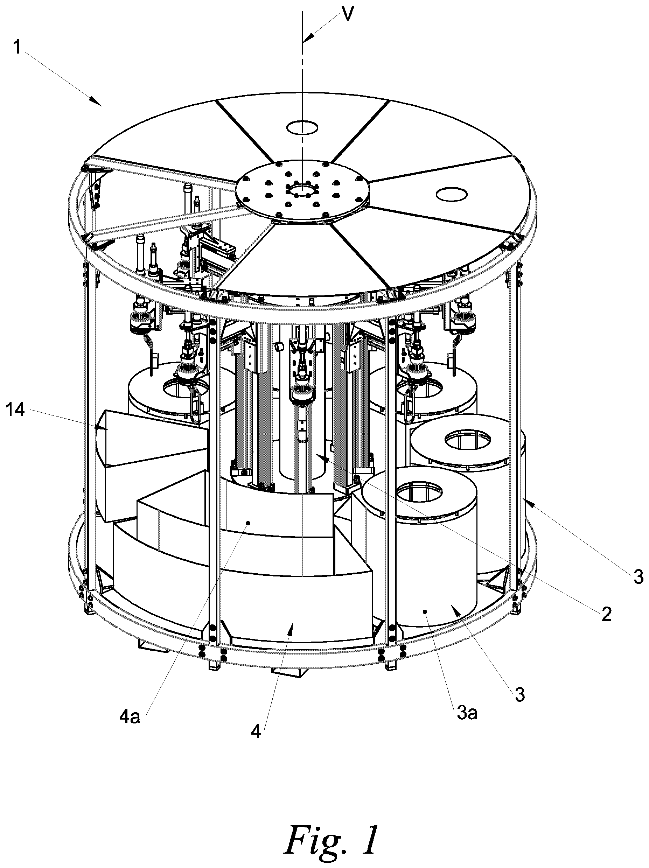

Further features and advantages of the invention will become more apparent from the description of a preferred but not exclusive form of execution of the machine for thermoforming shoe uppers according to the invention, illustrated by way of illustration and not limitation in the accompanying drawings, in which
Figure 1 shows an axonometric view of the machine;

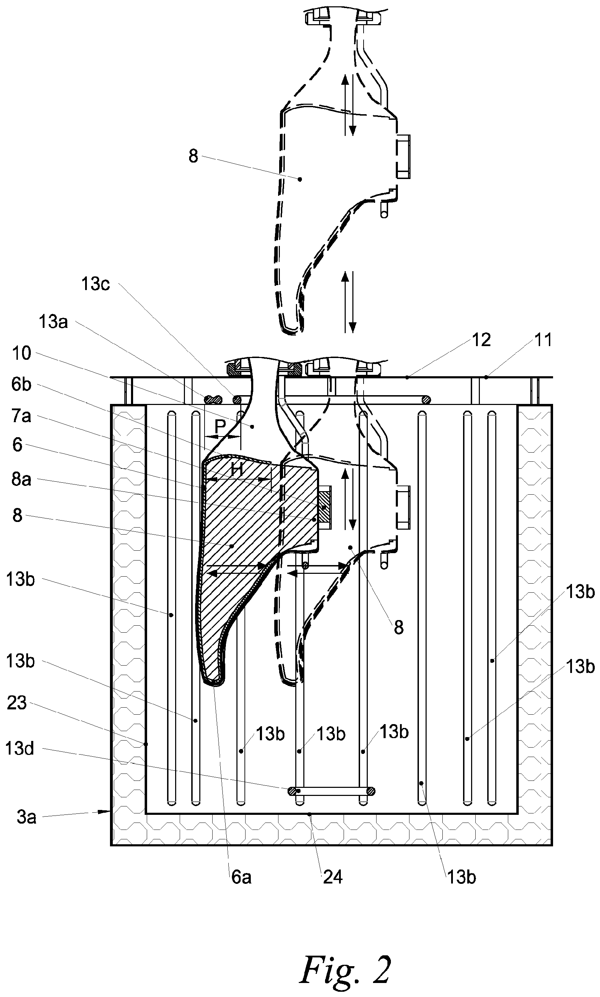

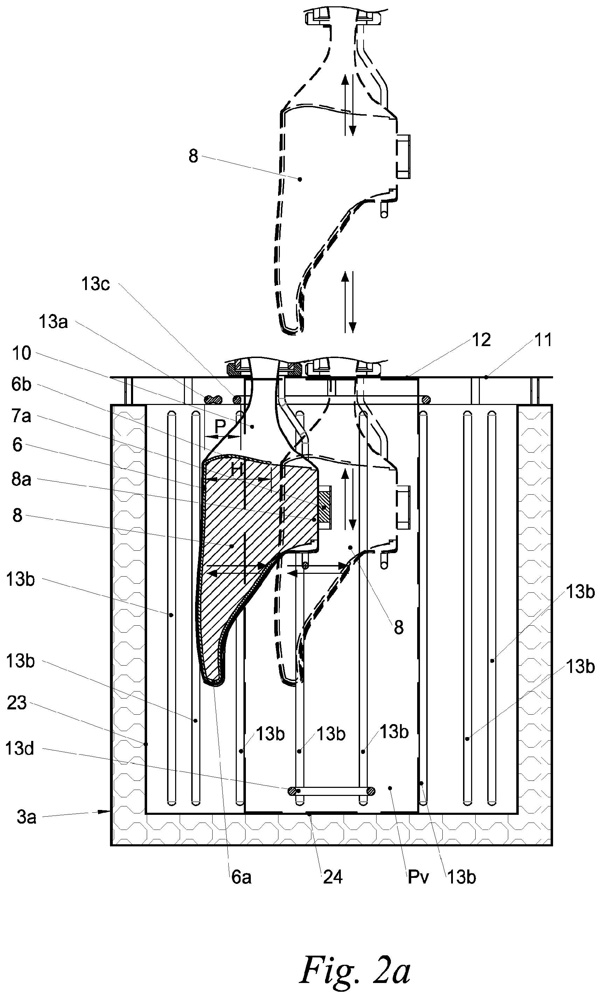

Figure 2 shows a view of a boiler in vertical section, where a solid line shows the upper in position for heat treatment, and a dotted line shows the upper entering and leaving the boiler, with vertical and horizontal directional arrows identifying the overall trajectory taken by the upper as it enters the boiler, moves into position for heat treatment and exits the boiler;
figure 2a is identical to figure 2 but has the vertical projection of the boiler cover opening highlighted;

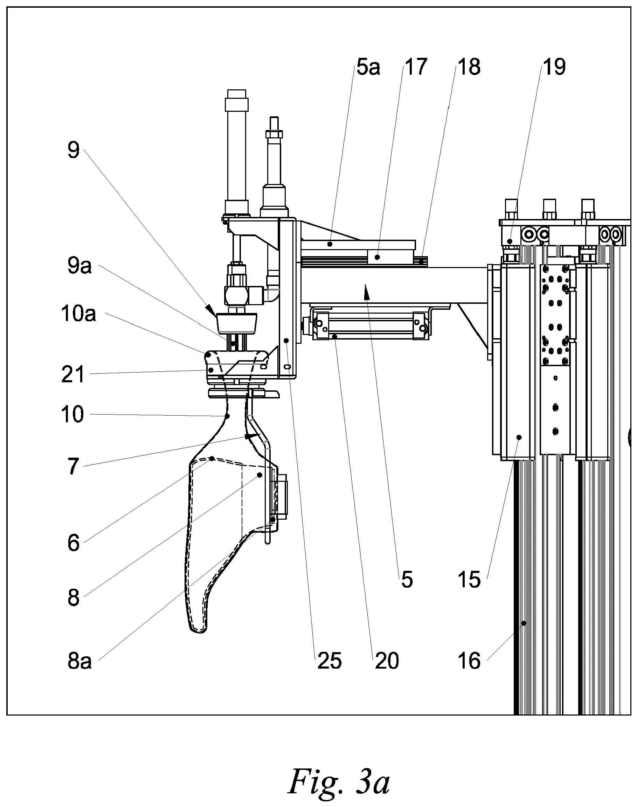

Figure 3a shows in side elevation a portion of the machine (the boiler has been removed for ease of viewing) including a radial arm supporting the fixing block of the rigid last and the pneumatic head for vacuum creation in the elastomeric sheath, with the arm extension retracted;

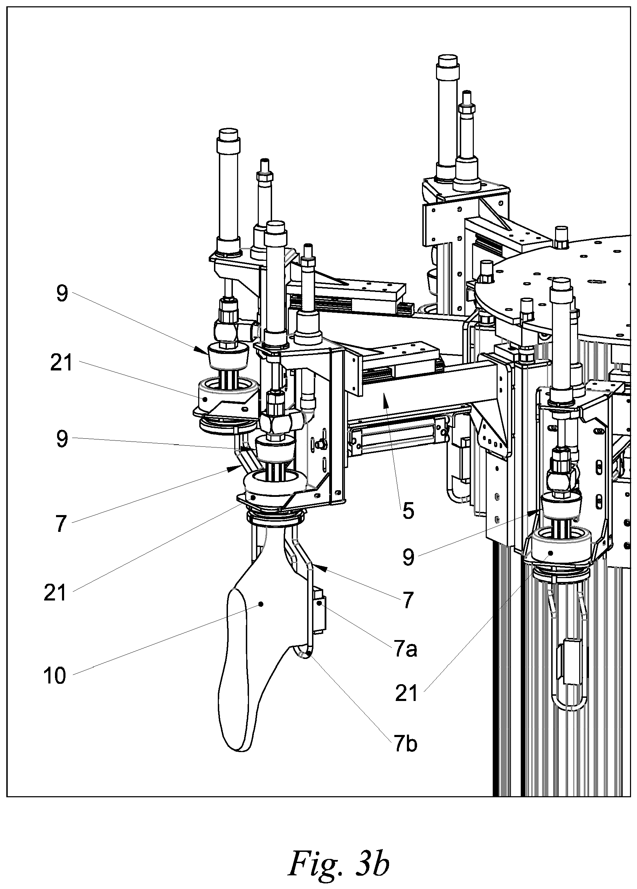

Figure 3b shows the machine portion of figure 3a in axonometry but with the arm extension retracted;

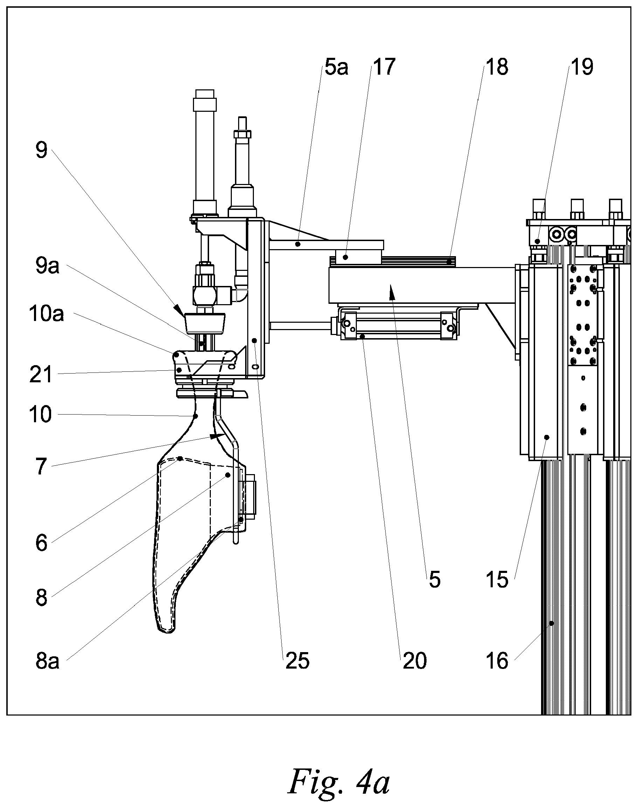

Figure 4a shows in side elevation a portion of the machine (the boiler has been removed for ease of viewing) including a radial arm supporting the fixing block of the rigid last and the pneumatic head for vacuum creation in the elastomeric sheath, with the arm extension extended;

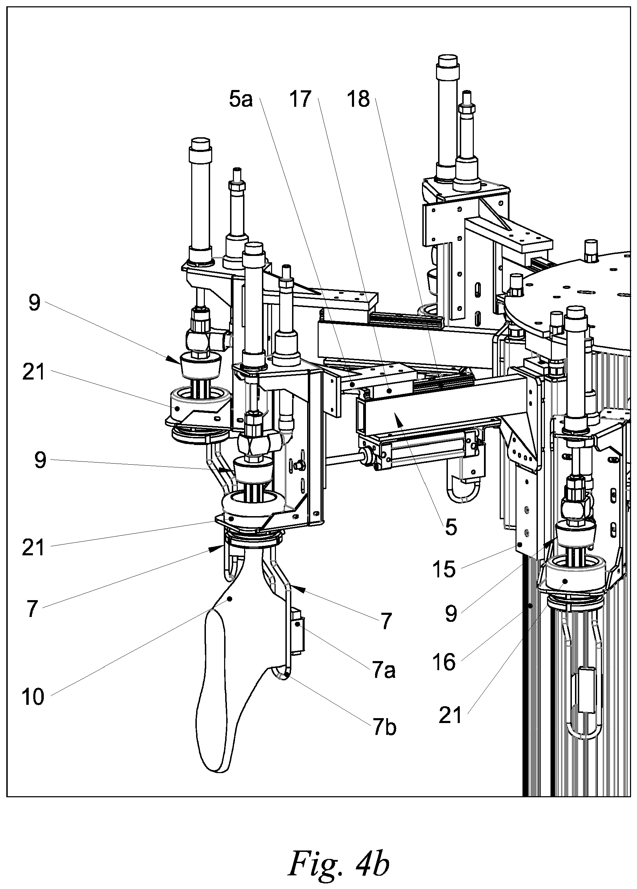

Figure 4b shows the machine portion of figure 4a in axonometry but with the arm extension extended;

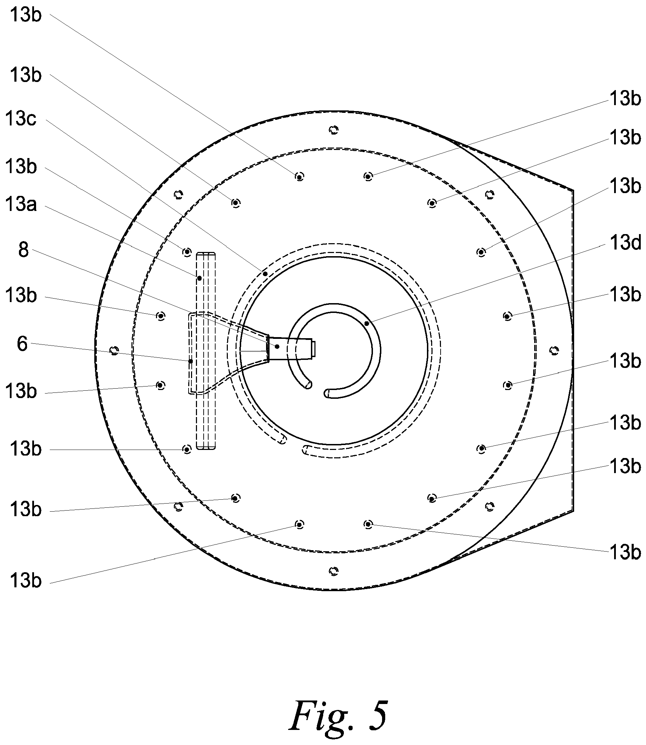

Figure 5 shows a plan view of a boiler from above.

With reference to the above-mentioned figures, a machine for thermoforming shoe uppers 6 is shown, indicated overall by reference number 1.

Upper 6 is of the type comprising one or more layers of thermoformable material.

Machine 1 comprises a movable part, comprising a rotatable central support 2, and a plurality of fixed heat treatment stations 3, 4 arranged around the rotatable central support 2.

In addition to heat treatment stations 3, 4 there is a station 14 for loading uppers 6 to be treated and unloading treated uppers 6.

The central support 2 develops longitudinally along a vertical axis V and is motorised so that it can rotate in steps around the vertical axis V.

The central support 2 supports at least one, and particularly a plurality of arms 5 each of which, as we shall see, is intended to support an upper 6.

The arms 5 extend radially about the vertical axis V of the central support 2 and are angularly distributed around the vertical axis V of the central support 2.

The arms 5 have an angular distancing pitch co-ordinated with the angular distancing pitch of the stations 3, 4, 14 around the vertical axis V of the central support 2 and with the rotation pitch of the central support 2 in such a way that at each rotation pitch of the central support 2 the uppers 6 are positioned at a heat treatment station 3, 4.

Each arm 5 supports a fixing block 7 of a rigid last 8 on which the upper 6 can be fitted.

Each arm 5 also supports a pneumatic head 9 engaged fluid-tightl with the port 10a of an elastomeric sheath 10 in which the upper 6 fitted in the rigid last 8 can be positioned.

The pneumatic head 9 has a coupling end 9a in the elastomeric sheath 10 which can be selectively connected, by means of suitable shut-off valve means (not shown), to a vacuum pump (not shown) for creating a vacuum in the elastomeric sheath 10 or to means (not shown) for pressurising the elastomeric sheath 10 with a flow of cooled air.

The elastomer sheath 10 can be threaded into a ring 21 cooperating with the pneumatic head 9.

In particular, the edge of the port 10a of the elastomeric sheath can be turned back onto the ring 21 and tightened between the ring 21 and the pneumatic head 9.

The pneumatic head 9 is more precisely vertically movable relative to the ring 21, via a dedicated vertical translation actuator 22, between a clamping position and a release position of the elastomeric sheath 10.

Preferably, the fixing block 7 is configured to fix the rigid last 8 in a position where the longitudinal axis of the upper 6 connecting the toe 6a to the heel 6b is oriented vertically, with the toe 6a of the upper 6 pointing downwards and the heel 6b of the upper 6 pointing upwards.

The heat treatment stations 3, 4 comprise at least one and in particular a plurality of boilers 3a and at least one and in particular a single cooling tank 4a.

Cooled water preferably circulates in the cooling tank 4a.

Each boiler 3a has an upper lid 11 with an inlet and outlet opening 12 for the upper 6.

Each boiler 3a has internally heating elements 13a, 13b, 13c, 13d comprising at least one upper heating element 13a, 13c, 13d from above or below and at least one upper heating element 13b from the side.

The 13a, 13b, 13c, 13d heating elements of upper 6 are formed by short-wave emitting radiant lamps, particularly in the infrared range.

Each boiler 3a preferably has a vertical cylindrical containing body 23 along whose internal vertical axial generators the heating elements 13b formed specifically by radiating lamps with a vertical longitudinal axis are arranged at regular pitch.

In the illustrated preferred solution in which the upper 6 is supported with the toe 6a pointing downwards and the heel 6b pointing upwards, there is provided at least one first heating element from above 13a positioned under the lid 11 outside the vertical projection Pv of the inlet and outlet opening 12 of the lid 11 of the boiler 3a.

In particular, the first heating element from above 13a is formed by a linear radiant lamp tangential to an orthogonal circumference and centred on the axis of the vertical cylindrical containing body 23.

The first heating element from above 13a consists specifically of a double straight tube lamp.

In the preferred solution illustrated, the heating elements comprise, in addition to the radiant lamps 13a, 13b, a second radiant lamp 13c from above, this time circular in shape, surrounding the inlet and outlet opening 12 of the lid 11.

In the preferred solution illustrated, the heating elements finally comprise a circular radiant lamp from below 13d contained within the vertical projection Pv of the inlet and outlet opening 12 of the lid 11.

The second circular lamp 13c radiating from above is in a position radially internal to the first radiating lamp 13a with respect to the axis of the vertical cylindrical containing body 23.

Radiant lamps 13a and 13c are attached to the lid 11, radiant lamp 13b is attached to the side wall of the vertical cylindrical containing body 23, and radiant lamp 13d is attached to the bottom base 24 of the vertical cylindrical containing body 23.

In a construction variant not shown in which the upper 6 is supported with the toe 6a pointing upwards and the heel 6b pointing downwards, there is instead at least one first heating element from below arranged above the bottom base 24 of the vertical cylindrical containing body 23 in a position outside the vertical projection Pv of the inlet and outlet opening 12 of the lid 11 of the boiler 3a. Also in this case, the first heating element from below can be formed by a linear radiant lamp tangential to a circumference orthogonal to and centred on the axis of the vertical cylindrical containing body 23, or by a radiant lamp with a longitudinal axis radial to the axis of the vertical cylindrical containing body 23.

The 3a boilers are all the same, the difference is in the lamp activation programme.

The machine 1 provides means for transporting the upper 6 inside the boiler 3a in a heat treatment position at least partially outside the vertical projection Pv of the inlet and outlet opening 12 of the lid 11.

In this heat treatment position, the upper 6 is vertically aligned with the heating elements from above 13a, 13c.

The transport means comprise a first linear slide guide 16 of arm 5 to insert and extract the upper 6 through the inlet and outlet opening 12 of lid 11 of boiler 3a and a second linear slide guide 18 of a movable extension 5a of arm 5 to bring the upper 6 to the heat treatment position.

More specifically, the means of transport may position the upper 6 in such a way that at least a preponderant portion P of the extension H in height of heel 6b is vertically aligned with the heating elements from above 13a, 13c.

The first linear slide guide 16 and the second linear slide guide 18 are transverse to each other.

The first linear slide guide 16 is oriented in a direction parallel to the V-axis of the central vertical support 2 and the second linear slide guide 18 is oriented in a direction radial to the V-axis of the central vertical support 2.

Arm 5 has a first slide 15 coupled with the first guide 16.

Extension 5a has a second slide 17 coupled with the second guide 18.

The first guide 16 is rigidly attached to the vertical support 2.

The second guide 18 is rigidly attached to arm 5.

The fixing block 7 of the rigid last 8, the pneumatic head 9 and the ring 21 are mounted on a mounting 25 rigidly attached to the extension 5a.

The first slide 15 is actuated by a corresponding translation actuator 19.

Similarly, the second slide 17 is actuated by a corresponding translation actuator 20.

Preferably the fastening system of rigid last 8 to the fixing block 7 is of the magnetic type and in particular the fixing block 7 provides for a plate 7a that can be magnetically coupled to a counterplate 8a provided by rigid last 8.

Plate 7a and counterplate 8a can both be formed by permanent magnets, or one can be formed by a permanent magnet and the other by a ferromagnet.

Plate 7a is supported by fork 7b which is part of fixing block 7.

The fork 7b extends vertically below the ring 21.

The electronic controller of machine 1 is programmed to station the upper 6 in the heat treatment position within each boiler 3a.

The machine's electronic controller 1 is programmed to activate the pneumatic head 9 for vacuum creation in the elastomeric sheath 10 prior to the introduction of the upper 6 into the first boiler 3a.

The electronic controller of machine 1 is programmed to maintain the vacuum in the elastomer sheath 10 at least until the end of the heat treatment in the last boiler 3a.

In more detail, the electronic controller of the machine 1 is programmed to continuously hold the vacuum in the elastomeric sheath 10 from before the entry of the upper 6 into the first boiler 3 to before the exit of the upper 6 from the last boiler 3a to the end of the heat treatment in the last boiler 3a.

Then, at the end of the last heat treatment in the last boiler 3a, the vacuum is removed before the upper 6 is extracted from the last boiler 3a.

The electronic controller is programmed to subject the upper 6 in the series of boilers 3a to a series of heat treatments with progressively decreasing thermal energy output. This can be done in particular by modulating the power and/or duration of the activation of the radiant lamps as the upper 6 moves from one boiler 3a to the next boiler 3a.

The machine's electronic controller 1 is programmed to activate the means of pressurising the elastomeric sheath 10 with a flow of cooled air when the upper 6 is immersed in the cooling water tank 4a.

The machine's electronic controller 1 is programmed to sequentially immerse the upper 6 in at least two distant points of the cooling water tank 4a.

The thermal radiation developed in the boilers 3a advantageously ensures uniform heating of the fabric layers forming the upper 6 fitted on the rigid last 8, and in particular the heel area 6b of the upper 6 is also adequately irradiated.

The consolidation of the union of the thermoformable fabric layers forming the upper 6 is facilitated both by the compression force due to the vacuum maintained within the elastomeric sheath 10 during the heating of the upper in the boilers 3a, and by the compressing force due to the flow of cooled air circulating through the elastomeric sheath 10 during the cooling of the upper in the cooling tank 4a.

The flow of cooled air also helps to consolidate the bonding of the thermoformable fabric layers as it contributes to the proper cooling of the upper 6 in synergy with the cooled water circulating in the tank.

In brief, the operation of machine 1, referring to an upper, 6, is as follows.

The upper 6 is fitted on the rigid last 8 and the upper 6 fitted on the rigid last 8 is inserted into the elastomeric sheath 10.

At the loading station 14, where an arm 5 is stationed, the operator manually inserts the elastomeric sheath 10 into the ring 21, manually turns the edge of the port 10a of the elastomeric sheath 10 onto the ring 21, and manually controls the descent of the pneumatic head 9 to tighten the elastomeric sheath 10.

The operator then fixes the rigid last 8 by manually coupling the counterplate 8a to the plate 7a.

At this point the operator, via a machine interface, gives a command to start the thermoforming process.

The vacuum pump creates a vacuum in the elastomer sheath 10, which consequently adheres intimately to the rigid last 8.

The vertical support 2 rotates one pitch and thus brings the upper 6 above the lid of the first boiler 3a into a position vertically aligned with the opening of the lid 11.

Arm 5, with extension 5a in retracted position, descends through opening of the lid 11 and stops at a certain height.

Subsequently, the extension 5a extends and brings the upper 6 to stand in the heat treatment position outside the vertical projection Pv of the opening of the lid 11 and vertically aligned with the lamp radiating from above.

After irradiation by the lamps, upper 6 performs an opposite movement to the one just described and returns to its initial position outside the first boiler 3a.

The vertical support rotates another pitch and brings the upper 6 over the lid 11 of the second boiler 3a.

The treatment cycle is repeated at the second and subsequent boilers 3a.

The difference between the various treatment cycles is determined by the irradiated thermal power and/or the irradiation time of the lamps and the fact that in the last boiler 3a, at the end of the irradiation and before the extraction of the upper 6, the vacuum within the elastomeric sheath 10 is permanently eliminated as the vacuum pump is switched off.

The vertical support 2 rotates one pitch to bring the upper 6 from the last boiler 3a above the cooling tank 4a.

At this point, the arm 5 is lowered to immerse the upper 6 in the cooling tank 4a and the pneumatic head 9 is connected to the pressurisation means which are activated.

After an initial station in a first immersion position in the cooling tank 4a, arm 5 lifts to extract upper 6 from the cooling tank 4a, then vertical support 2 rotates a further pitch and arm 5 lowers again to immerse upper 6 in the cooling tank 4a.

After a second soaking position in the cooling tank 4a, the arm 5 lifts to extract the upper 6 from the cooling tank 4a.

At this point the vertical support 2 rotates another pitch to bring the upper 6 to the unloading station 14.

In practice, the materials used, as well as the dimensions, can be any according to requirements and the state of the art.

## Claims

1. Machine (1) for thermoforming at least one upper (6) fitted on a rigid last (8) positioned in an elastomeric sheath (10), comprising:
- an electronic controller;
- a central support (2) rotating in steps around a vertical axis (V), said central support (2) having: at least one radial arm (5) supporting a block (7) for fixing the rigid last (8); and a pneumatic head (9) engageable fluid-tight with a port (10a) of the elastomeric sheath (10);
- a plurality of heat treatment stations (3, 4) arranged around said central support (2) comprising at least one boiler (3a) and at least one cooling water tank (4a), wherein said at least one boiler (3a) has: an upper lid (11) having an inlet and outlet opening (12) for said upper (6); internal radiant energy heating elements (13a, 13b, 13c, 13d) including at least one upper heating element from above or below (13a,13c,13d) and at least one upper heating element from the side (13b);
**characterised by** comprising means of transporting said upper (6) within said at least one boiler (3a) in a heat treatment position at least partially external to the vertical projection (Pv) of the inlet and outlet opening (12) of the lid (11).

2. Machine (1) for thermoforming the at least one upper (6) according to claim 1, **characterised by** the fact that in said heat treatment position said upper (6) is vertically aligned to said at least one heating element from above or below (13a).

3. Machine (1) for thermoforming at least one upper (6) according to any preceding claim, **characterised in that** said means of transport comprise a first linear slide guide (16) of said arm (5) for inserting and extracting said upper (6) through the inlet and outlet opening (12) of the lid (11) of the boiler (3a) and a second linear slide guide (18) of a movable extension (5a) of said arm (5) for bringing said upper (6) into said heat treatment position.

4. Machine (1) for thermoforming at least one upper (6) according to the preceding claim, **characterised by** the fact that said first linear slide guide (16) and said second linear slide guide (18) are transverse to each other.

5. Machine (1) for thermoforming at least one upper (6) according to the preceding claim, **characterised by** the fact that said first linear slide guide (16) is oriented in a direction parallel to said axis (V) and said second linear slide guide (18) is oriented in a direction radial to said axis (V).

6. Machine (1) for thermoforming said at least one upper (6) according to any one of claims 3 to 5, **characterised in that** said at least one arm (5) has a first slide (15) coupled to said first guide (16), said extension (5a) has a second slide (17) coupled to said second guide (18), said first guide (16) is rigidly coupled to said vertical support (2), said second guide (18) is rigidly coupled to said arm (5), said fixing block (7) of said rigid last (8) and said pneumatic head (9) are mounted on a mounting (25) fixed to said extension (5a).

7. Machine (1) for thermoforming at least one upper (6) according to any preceding claim, **characterised in that** said fixing block (7) is configured to secure said rigid last (8) with the toe (6a) of the upper (6) pointing downwards and the heel (6b) of the upper (6) pointing upwards.

8. Machine (1) for thermoforming the at least one upper (6) according to any preceding claim, **characterised in that** said internal heating elements (13a, 13b, 13c, 13d) include a first and a second heating element from above (13a, 13c) positioned under the lid (11) outside the vertical projection (Pv) of the inlet and outlet opening (12) of the lid (11).

9. Machine (1) for thermoforming at least one upper (6) according to any preceding claim, **characterised in that** said pneumatic head (9) has a coupling end (9a) in said elastomeric sheath (10) selectively connectable, by means of suitable valve means, to a vacuum pump or to means for pressurising the elastomeric sheath (10) with a flow of cooled air.

10. Machine (1) for thermoforming at least one upper (6) according to any preceding claim, **characterised by** the fact that said electronic controller is programmed to station said upper (6) in said heat treatment position.

11. Machine (1) for thermoforming at least one upper (6) according to any one of claims 9 and 10, **characterised in that** said electronic controller is programmed to select and activate said vacuum pump for creating vacuum in the elastomeric sheath (10) prior to introduction of the upper (6) into a first boiler (3a) of a series of boilers (3a).

12. Machine (1) for thermoforming the at least one upper (6) according to the preceding claim, **characterised in that** said electronic controller is programmed to deactivate said vacuum pump for vacuum elimination in the elastomeric sheath (10) only prior to the extraction of said at least one upper (6) from a last boiler (3a) of the series of boilers (3a).

13. Machine (1) for thermoforming at least one upper (6) according to any one of claims 9 to 12, **characterised by** the fact that said electronic controller is programmed to select and activate said pressurisation means when said upper (6) is immersed in said cooling water tank (4a).

## Patentansprüche

1. Maschine (1) zum Thermoformen von mindestens einem Schuhschaft (6), das auf einem starren Leisten (8) angebracht ist, welcher in einer elastomeren Hülle (10) positioniert ist, umfassend:
- einen elektronischen Steuerungsmechanismus;
- eine zentrale Halterung (2), die schrittweise um eine vertikale Achse (V) rotiert, wobei die zentrale Halterung (2) aufweist:
- mindestens einen radialen Arm (5), der einen Block (7) zum Fixieren des starren Leistens (8) trägt; und einen pneumatischen Kopf (9), der sich flüssigkeitsdicht mit einer Öffnung (10a) der elastomeren Hülle (10) verbinden lässt;
- mehrere Wärmbehandlungsstationen (3, 4), die um die zentrale Halterung (2) angeordnet sind und mindestens einen Heizkessel (3a) sowie mindestens einen Kühlwassertank (4a) umfassen, wobei der mindestens eine Heizkessel (3a) aufweist:
einen oberen Deckel (11) mit einer Einlass- und Auslassöffnung (12) für das Schuhschafte (6);
interne Strahlungsheizelemente (13a, 13b, 13c, 13d), darunter mindestens ein Heizelement oberhalb oder unterhalb (13a, 13c, 13d) und mindestens ein seitliches Heizelement (13b);
**dadurch gekennzeichnet, dass** Transportmittel vorgesehen sind, um das Schuhschafte (6) innerhalb des mindestens einen Heizkessels (3a) in eine Wärmbehandlungsposition zu bringen, die sich zumindest teilweise außerhalb der vertikalen Projektion (Pv) der Einlass- und Auslassöffnung (12) des Deckels (11) befindet.

2. Maschine (1) gemäß Anspruch 1, **dadurch gekennzeichnet, dass** sich das Schuhschafte (6) in der Wärmbehandlungsposition vertikal ausgerichtet zu dem mindestens einen oberen oder unteren Heizelement (13a) befindet.

3. Maschine (1) gemäß einem der vorhergehenden Ansprüche, **dadurch gekennzeichnet, dass** die Transportmittel eine erste lineare Führungsschiene (16) des Arms (5) zum Einführen und Herausziehen des Schuhschafte (6) durch die Öffnung (12) im Deckel (11) des Heizkessels (3a) sowie eine zweite lineare Führungsschiene (18) einer beweglichen Verlängerung (5a) des Arms (5) zum Bewegen des Schuhschafte (6) in die Wärmbehandlungsposition umfassen.

4. Maschine (1) gemäß Anspruch 3, **dadurch gekennzeichnet, dass** die erste lineare Führungsschiene (16) und die zweite lineare Führungsschiene (18) zueinander quer verlaufen.

5. Maschine (1) gemäß Anspruch 4, **dadurch gekennzeichnet, dass** die erste lineare Führungsschiene (16) in einer Richtung parallel zur Achse (V) und die zweite Führungsschiene (18) in radialer Richtung zur Achse (V) ausgerichtet ist.

6. Maschine (1) gemäß einem der Ansprüche 3 bis 5, **dadurch gekennzeichnet, dass** der mindestens eine Arm (5) eine erste Gleitführung (15) aufweist, die mit der ersten Führungsschiene (16) gekoppelt ist, die Verlängerung (5a) eine zweite Gleitführung (17) aufweist, die mit der zweiten Führungsschiene (18) gekoppelt ist, die erste Führungsschiene (16) fest mit der vertikalen Halterung (2) verbunden ist, die zweite Führungsschiene (18) fest mit dem Arm (5) verbunden ist und der Befestigungsblock (7) des starren Leistens (8) sowie der pneumatische Kopf (9) auf einer Halterung (25) montiert sind, die an der Verlängerung (5a) befestigt ist.

7. Maschine (1) gemäß einem der vorhergehenden Ansprüche, **dadurch gekennzeichnet, dass** der Befestigungsblock (7) so ausgestaltet ist, dass der starre Leisten (8) mit der Zehenspitze (6a) des Schuhschafte (6) nach unten und der Ferse (6b) nach oben ausgerichtet ist.

8. Maschine (1) gemäß einem der vorhergehenden Ansprüche, **dadurch gekennzeichnet, dass** die inneren Heizelemente (13a, 13b, 13c, 13d) ein erstes und ein zweites Heizelement von oben (13a, 13c) umfassen, die sich unter dem Deckel (11) außerhalb der vertikalen Projektion (Pv) der Öffnung (12) befinden.

9. Maschine (1) gemäß einem der vorhergehenden Ansprüche, **dadurch gekennzeichnet, dass** der pneumatische Kopf (9) ein Anschlussende (9a) in der elastomeren Hülle (10) aufweist, das selektiv über geeignete Ventilmittel entweder mit einer Vakuumpumpe oder mit Mitteln zur Druckbeaufschlagung der Hülle (10) durch gekühlte Luftströmung verbunden werden kann.

10. Maschine (1) gemäß einem der vorhergehenden Ansprüche, **dadurch gekennzeichnet, dass** der elektronische Steuerungsmechanismus programmiert ist, um das Schuhschafte (6) in der Wärmbehandlungsposition zu positionieren.

11. Maschine (1) gemäß einem der Ansprüche 9 und 10, **dadurch gekennzeichnet, dass** der elektronische Steuerungsmechanismus so programmiert ist, dass er die Vakuumpumpe auswählt und aktiviert, um vor dem Einführen des Schuhschafte (6) in einen ersten Heizkessel (3a) einer Reihe von Heizkesseln (3a) ein Vakuum in der elastomeren Hülle (10) erzeugt.

12. Maschine (1) gemäß Anspruch 11, **dadurch gekennzeichnet, dass** der elektronische Steuerungsmechanismus so programmiert ist, dass er die Vakuumpumpe nur unmittelbar vor dem Herausziehen des Schuhschafte (6) aus dem letzten Heizkessel (3a) der Reihe deaktiviert.

13. Maschine (1) gemäß einem der Ansprüche 9 bis 12, **dadurch gekennzeichnet, dass** der elektronische Steuerungsmechanismus so programmiert ist, dass er die Druckbeaufschlagungsmittel aktiviert, wenn das Schuhschaft (6) im Kühlwassertank (4a) eingetaucht ist.

## Revendications

1. Machine (1) pour le thermoformage d'au moins une tige (6) montée sur une forme rigide (8) positionnée dans une gaine élastomère (10), comprenant :
- un contrôleur électronique ;
- un support central (2) tournant par pas autour d'un axe vertical (V), ledit support central (2) comprenant : au moins un bras radial (5) supportant un bloc (7) de fixation de la forme rigide (8) ; et une tête pneumatique (9) pouvant être engagée de manière étanche avec un orifice (10a) de la gaine élastomère (10) ;
- une pluralité de stations de traitement thermique (3, 4) disposées autour dudit support central (2), comprenant au moins une chaudière (3a) et au moins une cuve d'eau de refroidissement (4a), ladite chaudière (3a) comportant :
un couvercle supérieur (11) muni d'une ouverture d'entrée et de sortie (12) pour ladite tige (6) ;
des éléments chauffants internes à rayonnement (13a, 13b, 13c, 13d) comprenant au moins un élément chauffant supérieur par le haut ou par le bas (13a, 13c, 13d) et au moins un élément chauffant supérieur latéral (13b) ;
**caractérisée en ce qu'**elle comprend des moyens de transport de ladite tige (6) à l'intérieur d'au moins ladite chaudière (3a), vers une position de traitement thermique située au moins partiellement en dehors de la projection verticale (Pv) de l'ouverture d'entrée et de sortie (12) du couvercle (11).

2. Machine (1) selon la revendication 1, **caractérisée en ce que**, dans ladite position de traitement thermique, ladite tige (6) est alignée verticalement avec ledit au moins un élément chauffant par le haut ou le bas (13a).

3. Machine (1) selon l'une quelconque des revendications précédentes, **caractérisée en ce que** lesdits moyens de transport comprennent un premier guide linéaire coulissant (16) dudit bras (5) pour l'insertion et l'extraction de ladite tige (6) à travers l'ouverture (12) du couvercle (11) de la chaudière (3a), et un second guide linéaire coulissant (18) d'une extension mobile (5a) dudit bras (5) pour amener ladite tige (6) dans ladite position de traitement thermique.

4. Machine (1) selon la revendication précédente, **caractérisée en ce que** ledit premier guide linéaire (16) et ledit second guide linéaire (18) sont perpendiculaires l'un à l'autre.

5. Machine (1) selon la revendication précédente, **caractérisée en ce que** ledit premier guide linéaire (16) est orienté parallèlement audit axe (V) et ledit second guide linéaire (18) est orienté radialement par rapport audit axe (V).

6. Machine (1) selon l'une quelconque des revendications 3 à 5, **caractérisée en ce que** ledit au moins un bras (5) comporte un premier coulisseau (15) couplé audit premier guide (16), ladite extension (5a) comporte un second coulisseau (17) couplé audit second guide (18), ledit premier guide (16) étant fixé rigidement audit support vertical (2), ledit second guide (18) étant fixé rigidement audit bras (5), ledit bloc de fixation (7) de ladite forme rigide (8) et ladite tête pneumatique (9) étant montés sur un support (25) fixé à ladite extension (5a).

7. Machine (1) selon l'une quelconque des revendications précédentes, **caractérisée en ce que** ledit bloc de fixation (7) est conçu pour fixer ladite forme rigide (8) avec la pointe (6a) de la tige (6) orientée vers le bas et le talon (6b) orienté vers le haut.

8. Machine (1) selon l'une quelconque des revendications précédentes, **caractérisée en ce que** lesdits éléments chauffants internes (13a, 13b, 13c, 13d) comprennent un premier et un second élément chauffant par le haut (13a, 13c) positionnés sous le couvercle (11), en dehors de la projection verticale (Pv) de l'ouverture (12) du couvercle (11).

9. Machine (1) selon l'une quelconque des revendications précédentes, **caractérisée en ce que** ladite tête pneumatique (9) comporte une extrémité de raccordement (9a) dans ladite gaine élastomère (10), pouvant être connectée sélectivement, au moyen de vannes appropriées, à une pompe à vide ou à des moyens de pressurisation de la gaine élastomère (10) avec un flux d'air refroidi.

10. Machine (1) selon l'une quelconque des revendications précédentes, **caractérisée en ce que** ledit contrôleur électronique est programmé pour positionner ladite tige (6) dans ladite position de traitement thermique.

11. Machine (1) selon l'une quelconque des revendications 9 et 10, **caractérisée en ce que** ledit contrôleur électronique est programmé pour sélectionner et activer ladite pompe à vide afin de créer un vide dans la gaine élastomère (10) avant l'introduction de ladite tige (6) dans une première chaudière (3a) d'une série de chaudières (3a).

12. Machine (1) selon la revendication précédente, **caractérisée en ce que** ledit contrôleur électronique est programmé pour désactiver ladite pompe à vide afin d'éliminer le vide dans la gaine élastomère (10) uniquement avant l'extraction d'au moins ladite tige (6) d'une dernière chaudière (3a) de la série.

13. Machine (1) selon l'une quelconque des revendications 9 à 12, **caractérisée en ce que** ledit contrôleur électronique est programmé pour sélectionner et activer lesdits moyens de pressurisation lorsque ladite tige (6) est immergée dans ladite cuve d'eau de refroidissement (4a).
